# EUROPÄISCHE PATENTSCHRIFT

(11) **EP 1 222 643 B1**
(45) Veröffentlichungstag und Bekanntmachung des Hinweises auf die Patenterteilung: **16.03.2005**
(21) Anmeldenummer: 01967031.4
(22) Anmeldetag: 25.08.2001
(51) Int. Cl.: G08B 26/00, G08B 25/04

(54) **VORRICHTUNG ZUR ELEKTRISCHEN ENERGIEVERSORGUNG VON MELDERN, STEUER- UND SIGNALISIERUNGSEINRICHTUNGEN**
DEVICE FOR SUPPLYING ELECTRICAL ENERGY TO DETECTORS, CONTROL DEVICES AND SIGNALLING DEVICES
DISPOSITIF D'ALIMENTATION EN ENERGIE ELECTRIQUE DE DETECTEURS, DE DISPOSITIFS DE COMMANDE ET DE SIGNALISATION

(30) Priorität: 30.09.2000 DE 10048599
(43) Veröffentlichungstag der Anmeldung: 17.07.2002
(73) Patentinhaber: ROBERT BOSCH GMBH, 70442 Stuttgart (DE)
(72) Erfinder: KOIDA, Gerhard, 81369 München (DE)
(86) Internationale Anmeldenummer: PCT/DE2001/003263
(87) Internationale Veröffentlichungsnummer: WO 2002/029750

(56) Entgegenhaltungen:
- EP-A- 0 101 172
- EP-A- 0 626 743
- DE-A- 3 619 289
- US-A- 4 752 698
- US-A- 5 801 913

## Beschreibung

### Stand der Technik

Die Erfindung geht aus von einer Vorrichtung zur elektrischen Energieversorgung von Meldern, Steuer- und Signalisierungseinrichtungen nach der Gattung des unabhängigen Patentanspruchs.

Es ist bereits bekannt, das Gefahrenmeldeanlagen, das sind vor allem Brandmeldeanlagen und/oder Einbruchmeldeanlagen, Melder, Steuer- und Signalisierungseinrichtungen weit verteilt in den zu überwachenden Bereichen aufweisen. Die Energieversorgung der Melder, Steuer- und Signalisierungseinrichtungen wird beispielsweise über ein Adernpaar bereitgestellt, an das alle peripheren Verbraucher, das sind die Melder, Steuer- und Signalisierungseinrichtungen, parallel geschaltet sind. Das Adernpaar geht von der Gefahrenmeldezentrale oder -anlage aus. Im folgenden wird abkürzend für den Begriff Gefahrenmeldezentrale oder -anlage das Wort Zentrale verwendet. Bei einem Kurzschluss reagiert die Zentrale in der Weise, dass alle Verbraucher dann ohne Energie sind, da die Energieversorgung von der Zentrale von der Energieversorgungsleitung getrennt wird.

Eine weitere Möglichkeit, die Melder, Steuer- und Signalisierungseinrichtungen der Zentrale mit Energie zu versorgen, ist, dass jeder periphere Verbraucher mit einem separatem Netzgerät und/oder einer Batterie oder einer separaten Leitung, ausgehend von der Zentrale, versorgt wird. Werden die peripheren Verbraucher jeweils mit einer eigenen Leitung versorgt, die von der Gefahrenmeldezentrale ausgeht, dann ist jeweils eine Einzelabsicherung gegen einen Kurzschluss notwendig.

Die US 4,752,698 offenbart ein Überwachungssystem mit einer Vielzahl an Überwachungsmitteln, die parallel an eine Signalleitung angeschlossen sind, und Schaltmittel zur Erkennung von Kurzschlüssen.

Aus der Entgegenhaltung EP 0 626 743 A2 ist eine Vorrichtung zur Fehlerüberwachung von Melderlinien bekannt, wobei Kurzschlüsse detektiert werden.

### Vorteile der Erfindung

Die erfindungsgemäße Vorrichtung zur elektrischen Energieversorgung von Meldern, Steuer- und Signalisierungseinrichtungen mit den Merkmalen des unabhängigen Patentanspruchs hat dem gegenüber den Vorteil, dass die Energieversorgung bei einem Kurzschluss für die peripheren Verbraucher, also die Melder, Steuer- und Signalisierungseinrichtungen, nicht ausfällt, obwohl die peripheren Verbraucher an eine Energieversorgungsleitung angeschlossen sind. Dies liegt daran, dass nun jeder Melder selbst eine Überstromdeduktion und ein Trennelement jeweils aufweist, um bei einem Kurzschluss mit dem Trennelement die Energieversorgungsleitung zu unterbrechen, so dass die Energieversorgung von der Zentrale aus durch einen Kurzschluß nicht belastet wird. Dabei wird nur eine Energieversorgungsleitung benötigt, so dass erheblich Material und Aufwand für eine Einzelabsicherung eingespart werden kann.

Durch die in den abhängigen Ansprüchen aufgeführten Maßnahmen und Weiterbildungen sind vorteilhafte Verbesserungen der im unabhängigen Patentanspruch angegebenen Vorrichtung zur elektrischen Energieversorgung von Meldern, Steuer- und Signalisierungseinrichtungen möglich.

Besonders vorteilhaft ist, dass bei der Inbetriebnahme der Energieversorgung ein jeweiliger Melder oder eine jeweilige Steuer- oder Signalisierungseinrichtung selbständig erkennt, ob auf dem nachfolgenden Leitungsstück ein Kurzschluss vorliegt. Abhängig davon wird die nachfolgende Leitung an die Energieversorgung angeschlossen oder nicht. Diesen Zustand hält die Energieversorgungseinrichtung beim jeweiligen Melder bis zur Abschaltung der Energieversorgung durch die Zentrale. Tritt nach der ungestörten Inbetriebnahme ein Kurzschluss auf, erkennt der Energieversorgungsanschluss in der Zentrale einen Überstrom, schaltet die Energieversorgung ab und startet eine neue Inbetriebnahme der Energieversorgung. Eine Unterbrechung in der Energieversorgungsleitung wird dadurch erkannt, dass ein oder mehrere Melder nicht energieversorgt werden und die Meldelinie der Zentrale nicht in Ruhezustand kommt. Bei moderner Meldelinientechnik werden zusätzlich die betroffenen Melder erkannt. Dies ermöglicht eine gezielte und rasche Reparatur und gibt einen Hinweis, in welchem Bereich Probleme vorliegen können.

Es ist insbesondere von Vorteil, dass die Energieversorgungsleitung als Ring ausgebildet ist, so dass bei einer Unterbrechung oder einem Kurzschluss zwischen zwei Meldern oder Steuer- und Signalisierungseinrichtungen von zwei Seiten die Melder, Steuer- und Signalisierungseinrichtungen mit elektrischer Energie versorgt werden können. Damit kann ein auftretender Kurzschluss oder eine Unterbrechung in einfacher Weise bewältigt werden. Zu diesem Zweck weist jeder Melder oder Steuer- und Signalisierungseinrichtung eine Enerigeversorgungsvorrichtung zur elektrischen Energieversorgung auf, die in beiden Richtungen speisbar ist.

Weiterhin ist es von Vorteil, dass die Zentrale einen Zähler in einem Energieversorungsanschluß am Ringausgang aufweist, mittels dessen die Beschaltung der Energieversorgungsleitung von dem Ringeingang aus überwacht wird. Zählt der Zähler bis zu einem vorgegebenen Wert, dann erkennt die Zentrale, dass die Spannung von dem Ringeingang aus nicht bis zum Ringausgang durchgeschaltet wurde, wobei der Zähler gestoppt wird, sobald am Ringausgang die Energieversorgungsspannung detektiert wird. Dann liegt keine Unterbrechung und kein Kurzschluß vor und alle an die Energieversorungsleitung angeschlossenen Komponenten sind mit elektrischer Energie versorgt. Wenn der Zähler bis auf Null zählt, wird ein Kurzschluß beziehungsweise eine Unterbrechung erkannt, so dass dann vom Ringausgang aus die Energieversorgungsleitung mit elektrischer Energie beaufschlagt wird, um die noch nicht versorgten peripheren Verbraucher mit elektrischer Energie zu speisen. Somit wird ein Kurzschluss bzw. eine Unterbrechung, die im Ring auftritt, isoliert und führt nicht dazu, dass Melder oder Steuer- oder Signalisierungseinrichtungen, die vom Ringein- bzw. -ausgang aus mit elektrischer Energie versorgt werden können, ohne Energie bleiben. Auch während des Betriebs bietet die Versorgung jeweils vom Ringeingang oder Ringausgang aus die Möglichkeit, auch auf einen während des Betriebs auftretenden Kurzschluss oder auf eine Unterbrechung zu reagieren. Dabei ist die Zentrale nicht darauf angewiesen, dass die einzelnen Melder, Steuer- oder Signalisierungseinrichtungen mit ihren erfindungsgemäßen Energieversorungsvorrichtungen der Zentrale über die Meldelinie übermitteln, dass ein Kurzschluss oder eine Unterbrechung vorliegt. Der Energieversorgungsanschluß in der Zentrale erkennt in diesem Fall selbständig, ob eine Störung auf dem Energieversorgungsring vorliegt. Damit ist es möglich, flexibel die Energieversorgung vom Ringeingang oder Ringausgang aus zusätzlich zu betreiben. Liegt also eine Unterbrechung oder ein Kurzschluss vor, dann wird dieser Kurzschluss isoliert, die Unterbrechung selbst ist bereits isoliert, und von beiden Ringrichtungen aus werden die Verbraucher am Ring mit elektrischer Energie versorgt. Die Erfindung führt damit letztlich zu einem zuverlässigeren System.

Dabei ist auch von Vorteil, dass die einzelnen Verbraucher, die an den Ring angeschlossen sind oder auch insbesondere wenn es sich um eine Stichleitung handelt, eine Meldung über eine erfolgreiche Energieversorgung der Zentrale über die Meldelinie mitteilen, so dass die Zentrale über die Energieversorgung der einzelnen Verbraucher aktuell informiert ist.

Weiterhin ist es dabei von Vorteil, dass bei einem Kurzschluss, also einem Überstrom oder einer Unterbrechung, die Zentrale eine Signalisierung auslöst, um Benutzern dies kenntlich zu machen. Solch eine Signalisierung besteht entweder in einer Anzeige, einem akustischem Signal oder einer elektronisch übermittelten Meldung. Dabei sind auch Kombinationen dieser Signalisierungsmöglichkeiten denkbar.

Desweiteren ist es von Vorteil, dass die erfindungsgemäße Energieversorgungsvorrichtung jeweils abgesetzt vom Gehäuse des Melders der Steuer oder Signalisierungseinrichtung betreibbar ist, so dass für einen jeweiligen Melder die erfindungsgemäße Energieversorgungsvorrichtung verwendet werden kann. Es gibt daneben auch Melder, die allein schon über die Meldelinie mit ausreichend elektrischer Energie versorgt werden können, so dass hier die Energieversorgungsleitung nur durchgeschleift werden muss. Der abgesetzte Aufbau macht weiterhin die Wartung des Verbrauchers und der erfindungsgemäßen Vorrichtung erheblich einfacher.

Es ist darüber hinaus von Vorteil, dass die Zentrale einen Analog-Digital-Wandler aufweist, mittels dessen eine schleichende Detektion von Kurzschlüssen oder Unterbrechungen möglich ist. Diese ermöglicht präventive Gegenmaßnahmen, um den Betrieb einer Gefahrenmeldeanlage unterbrechungsfrei zu gewährleisten.

### Zeichnung

Ausführungsbeispiele der Erfindung sind in der Zeichnung dargestellt und werden in der nachfolgenden Beschreibung näher erläutert. Es zeigt Figur 1 eine Konfiguration der Gefahrenmeldeanlage als Ring, Figur 2 einen Aufbau des erfindungsgemäßen Energieversorgungsanschlusses am Ringeingang, Figur 3 einen Aufbau des erfindungsgemäßen Energieversorgungsanschlusses am Ringausgang und Figur 4 einen Aufbau der erfindungsgemäßen Energieversorgungsvorrichtung, die in einem abgesetztem Gehäuse betrieben wird.

### Beschreibung

Heutige Meldelinien in der Sicherheitstechnik haben wesentlich mehr zentrale und periphere Intelligenz, z.B. das lokale Sicherheitsnetzwerk (LSN), als früher. Diese Systeme sind in der Lage, bei einfachen Kurzschlüssen oder Unterbrechungen ihre volle Funktionsfähigkeit aufrecht zu erhalten. Sie sind vorzugsweise nicht als Stichleitung, sondern in Ringtechnik ausgeführt, dass heißt das LSN-Adernpaar beginnt in der Zentrale (= Gefahrenmeldezentrale bzw. -anlage) und führt als Ringleitung bei den peripheren Meldern und anderen Geräten in verschiedenen Brandabschnitten oder Einbruchmeldebereichen vorbei und führt dann wieder zurück zur Zentrale.

Erfindungsgemäß werden daher Vorrichtungen zur elektrischen Energieversorgung von Meldern, Steuer- und Signalisierungseinrichtungen dahingehend verbessert, dass die elektrische Energieversorgung der Melder, der Steuerund Signalisierungseinrichtungen bei Kurzschlüssen und Unterbrechungen aufrecht erhalten wird. Dies wird dadurch erreicht, dass jedem Melder, jeder Steuer- und jeder Signalisierungseinrichtung, die an die Energieversorgungsleitung angeschlossen sind, mit einer Energieversorgungsvorrichtung mit einem Trennelement und einer eigenen Überstromerkennung bzw. -begrenzung ausgerüstet wird. Damit wird verteilte Intelligenz in einem Gefahrenmeldesystem in Bezug auf die Erkennung von Kurzschlüssen und Unterbrechungen realisiert.

Erkennt eine Überstromerkennung eines peripheren Verbrauchers während des Inbetriebnahmevorgangs der Energieversorgung einen Kurzschluss, wird das Trennelement der Energieversorgungsvorrichtung geöffnet, so dass der Kurzschluss elektrisch isoliert wird.

Bei Stichleitungen sind die Energieversorgungsvorrichtungen in Reihe angeordnet, während bei einer Energieversorgung, die in Ringtechnik realisiert ist, pro peripheren Verbraucher die Energieversorgungsvorrichtungen gemäß der Erfindung von beiden Seiten mit elektrischer Energie versorgt werden kann, ob vom Ringeingang oder vom Ringausgang aus. Dadurch wird die Isolation eines Kurzschlusses auf dem Ring von beiden Seiten ermöglicht. Bei reinen Stichleitungen sind die Verbraucher, die nach einem Kurzschluss oder auch nach einer Unterbrechung vorliegen, ohne weitere elektrische Energieversorgung. Im Fall der Stichleitung ist die Zentrale darauf angewiesen, dass die unversorgten Melder, Steuer- und Signalisierungseinrichtungen die fehlende Energieversorgung über die Meldelinie an die Zentrale melden.

Wird bei einer vorliegenden Ringtechnik vom Ringeingang aus der Ring mit Energie versorgt, wird ein Zähler aktiviert, der bis zu einem vorgegebenen Wert zählt, der, wenn er erreicht ist, anzeigt, dass die Energieversorgung vom Ringeingang aus nicht bis zum Ringausgang gekommen ist. Dies ist ein Anzeichen, dass die Energieversorgung auch vom Ringausgang aus aktiviert werden muss, um alle an den Ring angeschlossenen Verbraucher, sofern sie über die Energieversorgungsleitung erreicht werden können, mit Energie zu versorgen. Wird ein Kurzschluss bzw. Überstrom oder eine Unterbrechung auf der Energieversorgungsleitung erkannt, aktiviert eine Steuerung der Zentrale Mittel zur Signalisierung, um dies Benutzern anzuzeigen. Durch einen Analog-Digital-Wandler, der in der Zentrale untergebracht ist, ist es möglich, sogenannte schleichende Kurzschlüsse und Unterbrechungen frühzeitig zu entdecken.

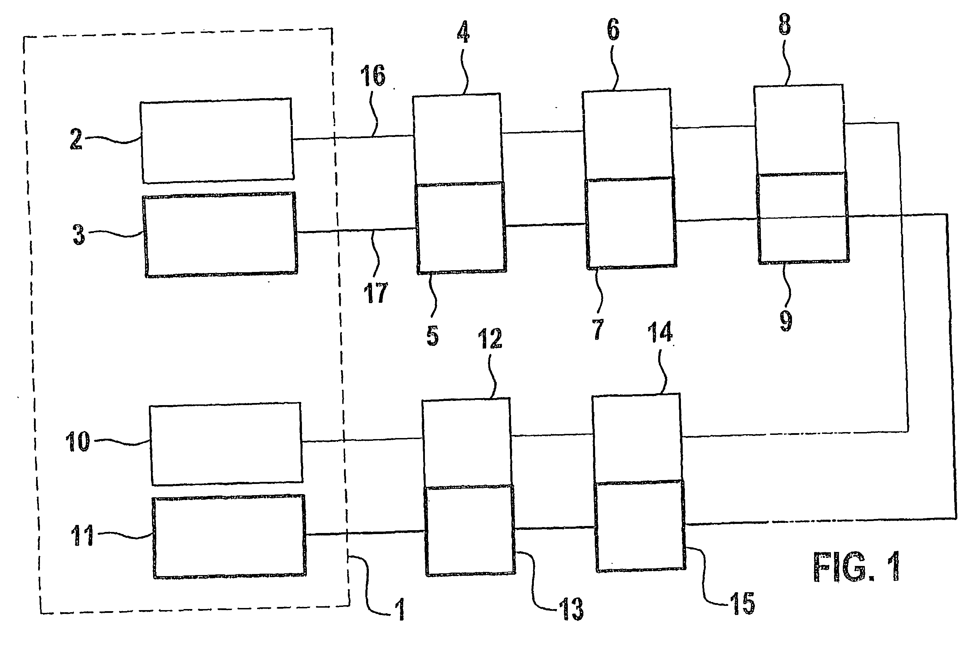

In Figur 1 ist als Blockschaltbild die Konfiguration einer Gefahrenmeldeanlage als Ring dargestellt. Eine Zentrale 1 weist einen Meldelinienanschluss 2 für den Ringeingang, einen Energieversorgungsanschluss 3 für den Ringeingang, einen Meldelinienanschluss 10 für den Ringausgang und einen Energievensorgungsanschluss 11 für den Ringausgang auf. Der Meldelinienanschluss 2 ist an die Meldelinie 16 angeschlossen. In diesem Beispiel ist die Meldelinie 16, das lokale Sicherheitsnetzwerk (LSN) von Bosch. Auch der Meldelinienanschluss 10 ist an die Meldelinie 16 angeschlossen. Die Energieversorgungsanschlüsse 3 und 11 sind an die Energieversorgungsleitung 17 angeschlossen. An die Meldelinie 16 sind Melder 4, 6, 8, 12 und 14 in Reihe angeschlossen. An die Energieversorgungsleitung 17 sind Energieversorgungsvorrichtungen 5, 7, 13 und 15 in Reihe angeschlossen, während für den Melder 8 eine Durchverbindung vorliegt, da der Melder 8 über die Meldelinie 16 mit Energie versorgt werden kann. Die Energieversorgungsvorrichtungen 5, 7, 13 und 15 weisen Trennelemente auf, um jeweils die angeschlossene Energieversorgungsleitung galvanisch zu trennen, wenn ein Kurzschluss vorliegt. Die Zentrale 1 kann weiterhin einen Analog-Digital-Wandler aufweisen, um auszuwerten, ob schleichende Kurzschlüsse bzw. Unterbrechungen auf der Energieversorgungsleitung 17 vorliegen.

Vom Energieversorgungsanschluss 3 als dem ersten Energieversorgungsanschluß wird eine Speisespannung an die erste Energieversorgungsvorrichtung 5 weitergegeben. Von der Energieversorgungsvorrichtung 5 bis zur Energieversorgungsvorrichtung 7 wird zeitverzögert eine kleine Konstantspannung mit Strombegrenzung weitergegeben. Spricht die Strombegrenzung nicht an, wird nach einer weiteren Zeitverzögerung die volle Speisespannung ohne Strombegrenzung an die Energieversorgungsvorrichtung 7 im zweiten Melder 6 weitergegeben. Der Vorgang läuft in dieser Weise weiter ab, bis die Energieversorgungsvorrichtung 13 als die letzte im Ring die volle Speisespannung an die Zentrale 1 und damit an den Energieversorgungsanschluss 11 als dem zweiten Energieversorgungsanschluß weitergegeben hat.

Den Meldern 4 und 6 sind jeweils die Energieversorgungsvorrichtungen 5 und 7 zugeordnet. Zu dem Melder 8 gehört die Durchverbindung 9, da der Melder 8 über die Meldelinie 16 mit Energie versorgt wird. Den Meldern 12 und 14 sind Energieversorgungsvorrichtungen 13 und 15 zugeordnet. Anstatt von Meldern können auch Steuer- oder Signalisierungseinrichtungen verwendet werden. Anstatt der hier fünf dargestellten Verbraucher, die an den Ring angeschlossen sind, sind auch mehr oder weniger Verbraucher möglich.

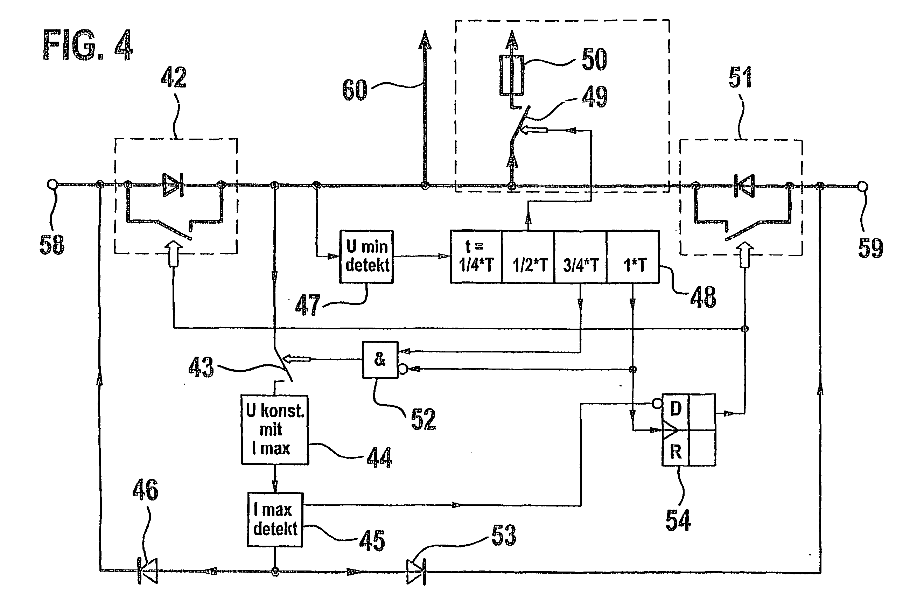

Wenn in einer Energieversorgungsvorrichtung beim Weitergeben der kleinen Konstantspannung aufgrund eines Kurzschlusses die Strombegrenzung anspricht, wird die Konstantspannung weggenommen und die Speisespannung wird nicht weiter geschaltet. Da nach Ablauf einer vorgegebenen Zeit am Energieversorgungsanschluss 11 keine Spannung nach der Energieversorgungsvorrichtung 13 ankommt, wird dann von diesem Anschluss 11 aus die Speisung der Energieversorgungsvorrichtung 13 eingeleitet. Der Vorgang läuft nun von der anderen Seite des Ringes weiter ab, da die Energieversorgungsvorrichtungen wie in Figur 4 gezeigt, symmetrisch aufgebaut sind.

Alternativ ist es möglich, dass die erfindungsgemäße Vorrichtung zur Energieversorgung von peripheren Verbrauchern als Stichleitung ausgebildet ist. Dann weist die Zentrale jedoch nur einen Energieversorgungsanschluß auf. Tritt ein Kurzschluß oder eine Unterbrechung auf und eine Energieversorgungsvorrichtung unterbricht die Energieversorgungsleitung mit einem Trennelement, dann sind die nachfolgenden peripheren Verbraucher ohne Energieversorgung.

Der Begriff periphere Verbraucher wird synonym für die Melder, Steuer- und Signalisierungseinrichtungen verwendet. Die Zentrale weist eine Steuerung auf, die als Prozessor oder als Steuerwerk ausgebildet sein kann. Der Zähler in der Zentrale kann aufwärts oder abwärts zählen.

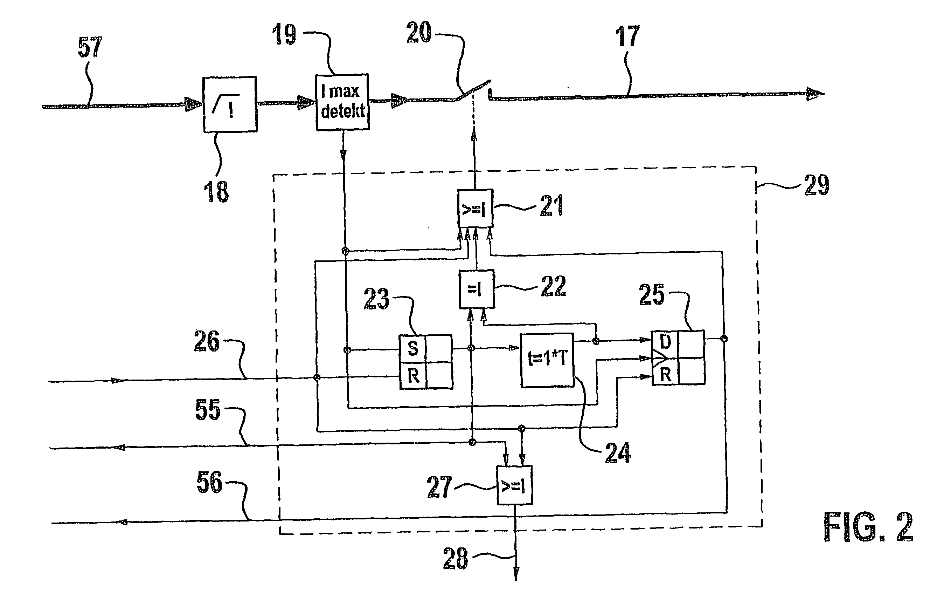

In Figur 2 ist der Aufbau des erfindungsgemäßen Energieversorgungsanschlusses 3 für den Ringeingang als Blockschaltbild dargestellt. Von einem zentralen Netzteil der Zentrale 1 erhält der Energieversorgungsanschluss 3 über die Leitung 57 die elektrische Energie. Mittels einer Strombegrenzung 18 und einer Überstromdetektion 19 wird erreicht, dass ein zu hoher Strom der vom zentralen Netzteil der Zentrale 1 kommt, nicht auf die Energieversorgungsleitung 17 weitergegeben wird. Dies vermeidet eine unnötige Belastung der Energieversorgungsleitung 17 und der nachgeschalteten Elemente. Die Strombegrenzung 18 kann beispielsweise mittels eines von einem Stromfühlerwiderstand gesteuerten Transistors realisiert werden, während die Überstromdetektion 19 als ein von einem Stromfühlerwiderstand gesteuerter Komparator ausgebildet sein kann.

Der Leistungsausgang der Überstromdetektion 19 führt auf einen Schalter 20, der im geschlossenen Zustand die Überstromdetektion 19 mit der Energieversorgungsleitung 17 verbindet. Ein Datenausgang der Überstromdetektion 19 führt zu einem ersten Dateneingang eines Gatters 21 und zu einem ersten Dateneingang eines Speichers 23 und zu einem Takteingang eines Speichers 25. Das Gatter 21, dessen Ausgang zum Schalter 20 führt, um den Schalter 20 zu schalten, ein Gatter 22, der Speicher 23, ein Verzögerungsglied 24 zur Zeitverzögerung, der Speicher 25 und ein Gatter 27 bilden die digitale Steuerung 29 des Energieversorgungsanschlusses 3.

Ein Ausgang des Gatters 22 führt an den zweiten Dateneingang des Gatters 21. Ein zweiter Dateneingang des Speichers 23 ist mit der Zentralensteuerung über eine Leitung 26 verbunden, um gegebenenfalls einen Impuls zum Rücksetzen zu erhalten, der dabei anzeigt, dass die Energieversorgungsleitung 17 mit der Spannungsversorgung vom Zentralnetzteil über eine Leitung 57 erneut verbunden werden soll. Dieser Eingang wird bei Inbetriebnahme bedient oder nach Reparatur der Energieversorgungsleitung, beispielsweise nach Beseitigung eines Kurzschlusses auf der Energieversorgungsleitung.

Die von der zentralen Steuerung kommende Leitung 26 führt zu einem vierten Eingang des Gatters 21, einem zweiten Dateneingang des Speichers 23, zu einem zweiten Eingang des Gatters 27 und zu einem zweiten Dateneingang des Speichers 25. Bei einem Impuls von der zentralen Steuerung wird der Enerigeversorgungsanschluß am Ringeingang zurückgesetzt, d.h. alle Speicher werden zurückgesetzt, die Energieversorgung der Peripherie wird abgeschaltet und anschließend neu in Betrieb genommen.

Der Ausgang des Speichers 23 führt einerseits zu einem ersten Eingang des Gatters 22 und zu einem Eingang des Verzögerungsglieds 24, zu einem ersten Eingang des Gatters 27 und führt zur Steuerung über die Leitung 55, um gegebenenfalls ein Signal zu übertragen, das einen Kurzschluss auf der Energieversorgungsleitung 17 anzeigt. Ein Ausgang des Verzögerungsglieds 24 führt zu einem zweiten Eingang des Gatters 22 und zu einem Dateneingang des Speichers 25. Der Ausgang des Speichers 25 führt einerseits zum dritten Eingang des Gatters 21 und andererseits zu einer Leitung 56, über die das Signal gegebenenfalls übertragen wird, dass der Energieversorgungsanschluss 3 abgeschaltet ist. Ein Ausgang des Gatters 27 führt zum Energieversorgungsanschluss 11.

Wird mittels der Überstromdetektion 19 ein Kurzschluss im Energieversorgungsanschluss 3 der Zentrale 1 erkannt, dann wird über den Speicher 23, der als Flipflop ausgebildet ist, ein entsprechendes Ausgangssignal erzeugt, so dass der Schalter 20 letztlich geöffnet wird und über die Leitung 55 ein Kurzschluss für den Energieversorgungsanschluss 3 zur zentralen Steuerung angezeigt wird. Die Steuerung ist ein Prozessor in der Zentrale 1, sie kann auch als einfaches Steuerwerk realisiert sein.

Nach dem ersten aufgetretenen Kurzschluß wird nach einer vorgegebenen Zeitverzögerung, die mittels des Verzögerungsglieds 24 eingestellt wird, der Schalter 20 wieder geschlossen, um einen einmaligen neuen Einschaltvorgang auszulösen. Dann wird erneut überprüft, ob die Überstromdetektion 19 immer noch einen Überstrom, also einen Kurzschluss anzeigt. Ist das der Fall, verknüpft das Gatter 21 diese Signale und lässt den Schalter 20 offen oder öffnet ihn, da Speicher 25 gesetzt ist. Weiterhin wird über die Leitung 56 zu der Zentralsteuerung in der Gefahrenmeldezentrale 1 das Signal übertragen, dass der Energieversorgungsanschluss 3 abgeschaltet ist, da sich ein Kurzschluss unmittelbar am Energieversorgungsanschluss 3, also auf der Energieversorgungsleitung 17 zwischen dem Energieversorgungsanschluss 3 und der Energieversorgungseinrichtung 5 befindet.

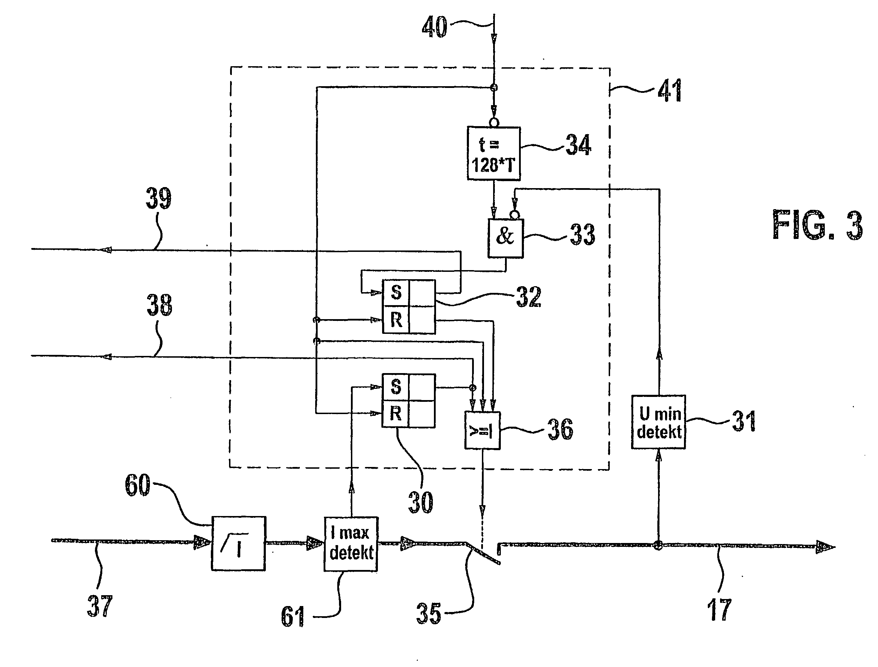

In Figur 3 ist der Energieversorgungsanschluss 11 als Blockschaltbild bezüglich seines inneren Aufbaus dargestellt. Über eine Leitung 37 ist der Energieversorgungsanschluss 11 mit dem Netzteil der Zentrale 1 verbunden. Die Leitung 37 ist an eine Strombegrenzung 60 angeschlossen. Auf die Strombegrenzung 60 folgt eine Überstromdetektion 61. Ein Energieversorgungsausgang der Überstromdetektion 61 führt zu einem Schalter 35, der die Überstromdetektion 61 einerseits mit der Leitung 17 und andererseits mit einer Spannungsdetektion 31 verbindet. Ein Datenausgang der Überstromdetektion 61 führt an einen ersten Eingang eines Speichers 30. Der Schalter 35 wird von einem Gatter 36 geschaltet, und zwar in Abhängigkeit der Beschaltung der Eingänge des Gatters 36.

An einen ersten Eingang des Gatters 36 ist ein Ausgang des Speichers 30 angeschlossen. Der Ausgang des Speichers 30 führt weiterhin zur Leitung 38, die mit der Steuerung der Zentrale 1 verbunden ist, um gegebenenfalls das Signal zur Steuerung zu übermitteln, dass ein Kurzschluss unittelbar am Energieversorgungsanschluss 11, also auf der Energieversorgungsleitung 17 zwischen Energieversorgungsanschluss 11 und Energieversorgungseinrichtung 13 vorliegt. An einen zweiten Eingang des Gatters 36 ist die Leitung 40 angeschlossen. Die Leitung 40 führt ein Signal von dem Energieversorgungsanschluss 3, welches dazu dient, die digitale Steuerung 41 bei einem Inbetriebnahmevorgang der Energieversorgung zu steuern.

An einen dritten Eingang des Gatters 36 ist ein erster Ausgang eines Speichers 32 angeschlossen. An einen zweiten Eingang des Speichers 30 ist ebenfalls die Leitung 40 angeschlossen. Die Leitung 40 ist auch an einen ersten Eingang des Speichers 32 angeschlossen. Darüber hinaus führt die Leitung 40 an einen negierten Eingang einer Zeitverzögerung 34. Ein Ausgang der Zeitverzögerung 34 führt an einen ersten Eingang eines Gatters 33. An einem zweiten negierten Eingang des Gatters 33 ist ein Ausgang der Spannungsdetektion 31 verbunden. Ein Ausgang des Gatters 33 führt an einen zweiten Eingang des Speichers 32. Ein Ausgang des Speichers 32 führt auf die Leitung 39, über die gegebenenfalls das Signal zur Steuerung der Zentrale 1 übermittelt wird, dass eine Unterbrechung auf dem Ring der Energieversorgungsleitung vorliegt. Die Unterbrechung auf dem Ring der Energieversorgungsleitung kommt entweder von einer Leitungsunterbrechung oder von einer Unterbrechung durch eine Energieversorgungseinrichtung 5, 7, 13 oder 15 auf dem Ring der Energieversorgungsleitung dadurch, dass eine dieser Energieversorgungseinrichtungen aufgrund eines Kurzschlusses zwischen zwei Energieversorgungseinrichtungen ihre Schalter offen hält.

Die Zeitverzögerung 34, das Gatter 33, die Speicher 30, 32 sowie das Gatter 36 bilden die digitale Steuerung 41 des Energieversorgungsanschlusses 11.

Wird von der Spannungsdetektion 31 erkannt, dass auf der Leitung 17 die vorgesehene minimale Versorgungsspannung nicht vorliegt, dann gibt die Spannungsdetektion 31 ein Signal an das Gatter 33, das als ein AND-Gatter ausgebildet ist. Dieses Signal wird mit einem Signal von der Zeitverzögerung 34 verknüpft, die das negierte Eingangssignal freigibt, wenn die vorgegebene Zeitverzögerung abgelaufen ist. Diese vorgegebene Zeitverzögerung entspricht der Zeit, die für das Durchschalten der Energieversorgung durch alle Energieversorgungseinrichtungen an allen Meldern, Steuerund Signalisierungseinrichtungen notwendig ist. Ist also die Spannung nach Ablauf der Zeitverzögerung nicht detektiert worden, setzt das AND-Gatter 33 den Speicher 32, so dass der Speicher 32 über die Leitung 39 der Zentrale 1 das Signal übermittelt, dass eine Ringunterbrechung vorliegt. Gleichzeitig wird ein negiertes Signal des Speichers 32 über den zweiten Ausgang an das Gatter 36 gegeben, so dass der Schalter 35 geschlossen werden kann. Wird als Signal für die Ringunterbrechung also vom ersten Ausgang des Speichers 32 eine Eins verwendet, dann wird über den zweiten Ausgang an das Gatter 36 eine Null übertragen, so dass der Schalter 35 geschlossen wird. Damit wird eine Energieversorgung vom Ringausgang aus gestartet. Wird über die Leitung 28 aus Figur 2 und über die Leitung 40 das Signal übertragen, dass der Energieversorgungsanschluss 3 die Leitung 17 nicht mit Energie versorgt, dann sorgt das Gatter 36 dafür, dass der Schalter 35 geschlossen wird, um vom Ringausgang aus die Leitung 17 zu speisen.

In diesem Fall wird damit begonnen, einen Teil des Rings der Energieversorgungsleitung, gegebenenfalls den ganzen Ring vom Energieversorgungsanschluss 11 zu versorgen.

Wird von der Überstromdetektion 61 ein Überstrom kommend vom Netzteil der Zentrale 1 detektiert, dann setzt das Signal von der Überstromdetektion 61 den Speicher 30, der dies dem Gatter 36 übermittelt, so dass der Schalter 35 geöffnet wird. Gleichzeitig wird über die Leitung 38 das Signal an die Steuerung der Zentrale 1. übermittelt, dass ein Kurzschluss direkt am Energieversorgungsanschluss 11 vorliegt.

Die zur Zentralensteuerung führenden Leitungen 55, 56, 39 und 38 können auch mittels zusätzlichem Gatter auf eine einzige Leitung zusammengefasst werden, die das Signal weitergibt, dass generell eine Störung auf dem Energieversorgungsring vorliegt. In diesem Fall werden keine Details der Störung weitergegeben.

In Figur ist als Blockschaltbild der Aufbau einer Energieversorgungsvorrichtung eines peripheren Verbrauchers (Melder, Steuer- oder Signalisierungsvorrichtung) dargestellt. Der Aufbau ist für jede Energieversorgungsvorrichtung gleich. Ein erster Anschluss 58, an den die Energieversorgungsleitung 17 anschließbar ist, und ein zweiter Energieversorgungsanschluss 59 sind austauschbar anschließbar, damit ist die Energieversorgung von peripheren Verbrauchern von zwei Seiten aus möglich.

Auf den Anschluß 58 folgt einerseits ein FET (Feldeffekttransistor)-Schalter 42 und andererseits eine Diode 46 in Sperrrichtung. Der FET-Schalter 42 besteht aus einer parasitären Diode und dem eigentlichen Schalter. Die parasitäre Diode ist durch die technologischen Eigenschaften eines FETs bedingt, während der Schalter beispielsweise durch das Verarmen oder Anreichern des Kanals durch eine Gatespannung erreicht wird. Alternativ zum FET-Schalter sind auch andere Leistungsschalter möglich.

Der Schalter des FET-Schalters 42 ist an einen Ausgang eines Speichers 54 angeschlossen, so dass der Speicher 54 den FET-Schalter 42 steuert. Der Ausgang des Speichers 54 ist weiterhin an den Steuereingang des FET-Schalters 51 angeschlossen. Damit schließt der Speicher 54 die beiden FET-Schalter 42 und 51 parallel oder öffnet sie parallel.

An einen Eingang des Speichers 54 ist ein Signalausgang einer Überstromdetektion 45 angeschlossen. An einen Takteingang des Speichers 54, der beispielsweise als D-Flipflop ausgebildet ist, ist ein erster Ausgang einer Zeitverzögerung 48 angeschlossen. Wird also ein Überstrom detektiert, liegt also ein Kurzschluss vor, dann läßt der Speicher 54 die FET-Schalter 42 und 51 im geöffneten Zustand. Den Überstrom detektiert die Überstromdetektion 45 von einer Konstantspannungsqüelle 44 mit Überstrombegrenzung. Diese Konstantspannungsquelle 44 wird über einen Schalter 43 geschaltet, der wiederum von einem AND-Gatter 52 gesteuert wird. An das AND-Gatter 52 ist an einem negierten Eingang der erste Ausgang der Zeitverzögerung 48 und an einen Eingang ein zweiter Ausgang der Zeitverzögerung 48 angeschlossen. Die Zeitverzögerung 48 erhält über ihren Eingang ein Signal von einer Mindestspannungsdetektion 47. Die Mindestspannungsdetektion 47 erkennt, ob auf der Energieversorgungsleitung 17 die Mindestspannung vorhanden ist, so dass der Kurzschlußtest mit der kleinen Konstantspannung aussagekräftig ist und die FET-Schalter 42 und 51 gegebenenfalls geschlossen werden können, um den Strom über die Energieversorgungsleitung 17 zur nächsten Energieversorgungsvorrichtung auf dem Ring durchzuschalten. Erkennt die Mindestspannungsdetektion 47, dass diese Spannung nicht vorliegt, werden die Schalter 42, 43 und 51 nicht geschlossen.

Beim Anlegen einer Speisespannung vom Anschluss 58, wobei die FET-Schalter 42 und 51 geöffnet sind und der Speicher 54 zurückgesetzt ist, wird über die Diode des Schalters 42 von der Mindestspannungsdetektion 47 eine ausreichende Spannung detektient. Dann beginnt nachfolgender Vorgang: Nach Ablauf einer Zeitverzögerung von 3/4 T, dass ist das dritte Element der Zeitverzögerung 48, wird die konstante Spannung von der Konstantspannungsquelle 44 auf den Anschluss 59 durchgeschaltet. Bei einer Überstromerkennung wird der Speicher 54 mit dem Zustand Null, nach Ablauf der Zeitverzögerung von einmal T, das ist das vierte Element mit dem ersten Ausgang der Zeitverzögerung 48, gehalten und die FET-Schalter 42 und 51 bleiben geöffnet. Erfolgt keine Überstromerkennung wird der Zustand Eins im Speicher 54 am Ausgang gehalten. Mit dem Ausgang des Speichers 54 werden also die FET-Schalter digital angesteuert, um die Energieversorgungsleitung 17 durchzuschalten.

Der zu speisende Melder, der der Energieversorgungsvorrichtung zugeordnet ist, erhält seine Speisung über die Verbindung 60. Handelt es sich beispielsweise um die Energieversorgungsvorrichtung 5, so wird der zugehörige Melder 4 über die Verbindung 60 gespeist.

In einer Weiterbildung ist vorgesehen, dass die Energieversorgungsvorrichtung gegebenenfalls einen zusätzlichen Schalter enthält, der mit der Zeitverzögerung ½ T, das ist das zweite Element der Zeitverzögerung 48, digital eingeschaltet wird. Handelt es sich bei dem zu speisenden Melder, der zu speisenden Steuer- oder Signalisierungseinrichtung um einen Verbraucher, der beim Anlegen der Energieversorgung eine Stromaufnahme mit stark erhöhtem Einschaltstrom aufweist, beispielsweise mit einem Schaltspannungswandler in seiner eigenen Energiezuführungsschaltung oder Bauteilen mit gleicher Wirkung, so ist diese Weiterbildung der Energieversorgungsvorrichtung vorgesehen. Der Melder wird dann nicht über die Verbindung 60 angeschlossen, sondern über den Schalter 49 und gegebenenfalls eine Sicherung 50.

In einer Weiterbildung ist vorgesehen, dass die Zentrale einen Analog-Digital-Wandler aufweist, mit dessen Hilfe die Spannung am Ort der Spannungsdetektion 31 im Energieversorgungsanschluss 11 auf Veränderungen während des Betriebs überwacht wird und gegebenenfalls auch den Strom im Energieversorgungsanschluss 3 überwacht wird. Damit ist es möglich, sogenannte schleichende Kurzschlüsse und schleichende Unterbrechungen frühzeitig zu entdecken.

## Patentansprüche

1. Vorrichtung zur elektrischen Energieversorgung von Meldern, Steuer- und Signalisierungseinrichtungen (4, 6, 8, 12 und 14), die an eine Meldelinie (16) angeschlossen sind, wobei an die Meldelinie (16) und an eine Energieversorgungsleitung (17) eine Zentrale (1) angeschlossen ist, wobei die Zentrale (1) eine Steuerung und Mittel zur Signalisierung aufweist, **dadurch gekennzeichnet, dass** die Zentrale (1) einen ersten Energieversorgungsanschluß (3) mit einer ersten Überstromdetektion (19), mit einer ersten Überstrombegrenzung (18) und mit einem ersten Trennelement (20) aufweist, dass die Melder, die Steuer- und die Signalisierungseinrichtungen (4, 6, 8, 12 und-14) jeweils mit einer Energieversorungsvorrichtung (5, 7, 13, 15) verbunden sind, die jeweils mit der Energieversorgungsleitung (17) verbunden ist und die eine zweite Überstromdetektion (45), eine zweite Überstrombegrenzung (44) und ein zweites Trennelement (42, 51) jeweils aufweist.

2. Vorrichtung nach Anspruch 1, **dadurch gekennzeichnet, dass** die Energieversorgungsvorrichtung (5, 7, 13, 15) derart ausgebildet ist, dass, wenn die Energieversorungsvorrichtung (5, 7, 13, 15) bei der Inbetriebnahme der Energieversorgung einen Überstrom auf der Energieversorgungsleitung (17) mit der zweiten Überstromerkennung (45) detektiert, die Vorrichtung (5, 7, 13, 15) das zweite Trennelement (42, 51) geöffnet hält.

3. Vorrichtung nach Anspruch 1, **dadurch gekennzeichnet, dass** die Energieversorgungsleitung (17) als Ring ausgebildet ist.

4. Vorrichtung nach Anspruch 3, **dadurch gekennzeichnet, dass** die Zentrale (1) einen zweiten Energieversorgungsanschluß (11) am Ringausgang aufweist, dass der zweite Energieversorungsanschluß (11) einen Zähler (34), eine dritte Überstromdetektion (61), eine dritte Überstrombegrenzung (60) und ein drittes Trennelement (35) aufweist, dass die Zentrale (1) den Zähler (34) startet, sobald die Zentrale (1) die Energieversorgungsleitung (17) den Ringeingang mit elektrischer Energie beschaltet, und dass, wenn nach Ablauf des Zählers der Ringausgang spannungslos ist, der zweite Energieversorgungsanschluß (11) den Ringausgang mit elektrischer Energie beschaltet.

5. Vorrichtung nach einem der vorhergehenden Ansprüche, **dadurch gekennzeichnet, dass** die Melder, die Steuer- oder Signalisierungseinrichtungen über die Meldungslinie (16) eine Meldung an die Zentrale (1) abgeben, dass die Melder, die Steuer- oder die Signalisierungseinrichtungen (4, 6, 8, 12 und 14) mit elektrischer Energie versorgt sind.

6. Vorrichtung nach einem der vorhergehenden Ansprüche, **dadurch gekennzeichnet, dass** die Steuerung derart ausgebildet ist, dass bei einer Detektion eines Überstroms mit der ersten Überstromdetektion (19) die Steuerung die Mittel zur Signalisierung zu einer entsprechenden Signalisierung veranlasst.

7. Vorrichtung nach einem der Ansprüche 4 bis 6, **dadurch gekennzeichnet, dass** die Steuerung derart ausgebildet ist, dass, wenn die Steuerung anhand der Meldungen feststellt, dass wenigstens eine Energieversorungsvorrichtung (5, 7, 13, 15) ohne Energieversorgung ist, die Steuerung die Mittel zur Signalisierung zu einer entsprechenden Signalisierung veranlasst.

8. Vorrichtung nach einem der vorhergehenden Ansprüche, **dadurch gekennzeichnet, dass** das zweite Trennelement (42, 51), die zweite Überstromerkennung (45) und die zweite Überstrombegrenzung (44) in einem von dem Gehäuse für den Melder oder die Steuer- oder die Signalisierungseinrichtung getrennten Gehäuse untergebracht sind.

9. Vorrichtung nach einem der vorhergehenden Ansprüche, **dadurch gekennzeichnet, dass** die Zentrale (1) einen Analog-Digital-Wandler aufweist, der mit der Energievrsorgungsleitung (17) verbindbar ist.

## Claims

1. Apparatus for supplying electrical power to detectors, control devices and signalling devices (4, 6, 8, 12 and 14), which are connected to a detection line (16), a control centre (1) being connected to the detection line (16) and to a power supply line (17), the control centre (1) having a controller and signalling means, **characterized in that** the control centre (1) has a first power supply connection (3) having a first overcurrent detection device (19), having a first overcurrent limiting device (18) and having a first disconnection element (20), **in that** the detectors, the control devices and the signalling devices (4, 6, 8, 12 and 14) are each connected to a power supply apparatus (5, 7, 13, 15), each of which is connected to the power supply line (17) and has in each case a second overcurrent detection device (45), a second overcurrent limiting device (44) and a second disconnection element (42, 51).

2. Apparatus according to Claim 1, **characterized in that** the power supply apparatus (5, 7, 13, 15) is designed such that, when the power supply apparatus (5, 7, 13, 15) detects an overcurrent on the power supply line (17) by means of the second overcurrent detection device (45) when the power supply is started, the apparatus (5, 7, 13, 15) holds the second disconnection element (42, 51) open.

3. Apparatus according to Claim 1, **characterized in that** the power supply line (17) is in the form of a ring.

4. Apparatus according to Claim 3, **characterized in that** the control centre (1) has a second power supply connection (11) at the ring output, **in that** the second power supply connection (11) has a counter (34), a third overcurrent detection device (61), a third overcurrent limiting device (60) and a third disconnection element (35), **in that** the control centre (1) starts the counter (34) as soon as the control centre (1) connects electrical power to the power supply line (17) at the ring input, and **in that**, when there is no voltage at the ring output once the counter has expired, the second power supply connection (11) connects electrical power to the ring output.

5. Apparatus according to one of the preceding claims, **characterized in that** the detectors, the control devices or signalling devices output a message to the control centre (1) via the message line (16), **in that** the detectors, the control devices or the signalling devices (4, 6, 8, 12 and 14) are supplied with electrical power.

6. Apparatus according to one of the preceding claims, **characterized in that** the controller is designed such that, when an overcurrent is detected by the first overcurrent detection device (19), the controller instructs the signalling means to produce a corresponding signal.

7. Apparatus according to one of Claims 4 to 6, **characterized in that** the controller is designed such that, when the controller establishes, on the basis of the messages, that at least one power supply apparatus (5, 7, 13, 15) is without power supply, the controller instructs the signalling means to produce a corresponding signal.

8. Apparatus according to one of the preceding claims, **characterized in that** the second disconnection element (42, 51), the second overcurrent detection device (45) and the second overcurrent limiting device (44) are accommodated in a housing which is separate from the housing for the detector, the control device or the signalling device.

9. Apparatus according to one of the preceding claims, **characterized in that** the control centre (1) has an analogue-to-digital converter which can be connected to the power supply line (17).

## Revendications

1. Dispositif d'alimentation en énergie électrique de détecteurs, de dispositifs de commande et de signalisation (4, 6, 8, 12 et 14), qui sont raccordés à une ligne de signalisation (16), une centrale (1), raccordée à la ligne de signalisation (16) et à une conduite d'alimentation en énergie (17), et qui présente une commande et des moyens de signalisation,
**caractérisé en ce que**
la centrale présente un premier raccord d'alimentation en énergie (3) comprenant une première détection de surintensité (19), une première limite de surintensité (18) et un premier élément de coupure (20), les dispositifs de détection de commande et de signalisation (4, 6, 8, 12 et 14) étant reliés chacun à un dispositif d'alimentation en énergie (5, 7, 13, 15) qui est lui-même relié à la conduite d'alimentation en énergie (17) et qui présente une deuxième détection de surintensité (45), une deuxième limitation de surintensité (44) et un deuxième élément de coupure (42, 51).

2. Dispositif selon la revendication 1,
**caractérisé en ce que**
le dispositif d'alimentation en énergie (5, 7, 13, 15) est constitué de manière que, quand il détecte au moyen de la deuxième détection de surintensité (45), la présence d'une surintensité dans la conduite d'alimentation en énergie (17) lorsque cette alimentation est mise en service, le dispositif (5, 7, 13, 15) maintient ouvert le deuxième élément de coupure (42, 51).

3. Dispositif selon la revendication 1,
**caractérisé en ce que**
la conduite d'alimentation en énergie (17) est constituée en anneau.

4. Dispositif selon la revendication 3,
**caractérisé en ce que**
la centrale (1) présente relié à la sortie de l'anneau, un deuxième raccord d'alimentation en énergie (11) qui comprend un compteur (34), une troisième détection de surintensité (61), une troisième limitation de surintensité (60) et un troisième élément de coupure (35), la centrale (1) démarrant le compteur (34) dès que la conduite d'alimentation (17) fournit de l'énergie électrique à l'entrée de l'anneau et, quand après l'arrêt du compteur, la sortie de l'anneau est sans tension, le deuxième raccord d'alimentation en énergie (11) alimente en énergie électrique la sortie de l'anneau.

5. Dispositif selon une des revendications précédentes,
**caractérisé en ce que**
les détecteurs, les dispositifs de commande ou de signalisation délivrent par la ligne d'information (16) une information à la centrale (1) indiquant que les détecteurs, les dispositifs de commande ou de signalisation (4, 6, 8, 12 et 14) sont alimentés en énergie électrique.

6. Dispositif selon une des revendications précédentes,
**caractérisé en ce que**
la commande est constituée de manière que, quand une surintensité est détectée par la première détection de surintensité (19), la commande demande aux moyens de signalisation de fournir la signalisation correspondante.

7. Dispositif selon une des revendications 4 à 6,
**caractérisé en ce que**
la commande est constituée de manière que, lorsqu'elle établit, à partir des informations, qu'au moins un dispositif d'alimentation en énergie (5, 7, 13, 15) n'est pas alimenté en énergie, la commande demande aux moyens de signalisation de fournir la signalisation correspondante.

8. Dispositif selon une des revendications précédentes,
**caractérisé en ce que**
le deuxième élément de séparation (42, 51), la deuxième détection de surintensité (45) et la deuxième limitation de surintensité (44) sont montés dans un boîtier séparé du boîtier prévu pour le détecteur ou pour le dispositif de commande ou de signalisation.

9. Dispositif selon une des revendications précédentes,
**caractérisé en ce que**
la centrale (1) est un convertisseur analogique numérique qui peut être relié à la conduite d'alimentation en énergie (17).
